# EUROPÄISCHE PATENTANMELDUNG

(11) **EP 1 072 500 A1**
(43) Veröffentlichungstag der Anmeldung: **31.01.2001**
(21) Anmeldenummer: 99114666.3
(22) Anmeldetag: 27.07.1999
(51) Int. Cl.: B62D 21/20

(54) **Chassis für ein- oder mehrachsige Fahrzeuganhänger**

(71) Anmelder: BPW Bergische Achsen Kommanditgesellschaft, 51674 Wiehl (DE)
(72) Erfinder: Grahl, Thorsten, Dipl.-Ing., 51674 Wiehl (DE); Fröse, Gerhard, Dipl.-Ing., 51643 Gummersbach (DE); Rhein, Bernd, Dipl.-Ing., 51491 Overath (DE)
(74) Vertreter: Stenger, Watzke & Ring Patentanwälte

(57) **Zusammenfassung**

Die Erfindung betrifft ein Chassis für ein- oder mehrachsige Fahrzeuganhänger, insbesondere Caravans. Ein besonders leichtes und in der Bauhöhe reduziertes Chassis ist erfindungsgemäß gekennzeichnet durch eine aus einem mehrfach profilierten Material bestehende Plattform (1) mit mehreren flächig an der Unterseite des Bodens eines Anhängeraufbaus anliegenden oberen Auflageflächen (2) sowie mit gegenüber diesen oberen Auflageflächen (2) tiefer gelegenen und mit diesen oberen Auflageflächen (2) verbundenen Bereichen, wobei am vorderen Ende der profilierten Plattform (1) eine Zugeinrichtung (14) und an der Unterseite der profilierten Plattform (1) mindestens ein Achskörper (9) festlegbar ist.

## Beschreibung

Die Erfindung betrifft ein Chassis für ein- oder mehrachsige Fahrzeuganhänger, insbesondere Caravans.

Das Chassis eines Fahrzeuganhängers dient zur Verbindung der Komponenten Zug- bzw. Auflaufeinrichtung, Achse und Kurbelstützen mit dem Boden des Anhängeraufbaus. Die aus der Praxis bekannten Chassis bestehen in der Regel aus Längs- und teilweise Querträgern, wobei die Träger als Rohre oder Profilträger ausgebildet sind. Das Chassis dient dabei als tragender Unterbau für den Anhängeraufbau, wobei sich das Chassis entweder unter dem Boden des Fahrzeugaufbaus befindet oder in diesen als sogenannter Sandwichboden integriert ist. Während die Längs- und Querholme aus Stahl oder Aluminium bestehen, besteht der Boden des Anhängeraufbaus bei Caravans meist aus zwei Sperrholzdeckschichten mit dazwischenliegenden Kanthölzern und Isoliermaterial. Die Kanthölzer werden im wesentlichen in Querrichtung des Chassis angeordnet, um die Kraftübertragung von den schmalen Längsträgern hin zu den Aufbauwänden sicherzustellen. Die Verbindung zwischen den Metallholmen des Chassis und dem hölzernen Boden des Fahrzeugaufbaus erfolgt dabei in der Regel über Verschrauben und teilweise zusätzliches Verkleben, so daß ein Verbund aus Holmchassis und Aufbau entsteht.

Ein nur mit Längsholmen zur Auflage des Aufbaubodens versehenes Chassis für Fahrzeuganhänger ist beispielsweise aus der DE-U-298 19 193 bekannt.

Nachteilig bei diesem bekannten Chassiskonzept ist, daß das aus Längs- und evtl. Querholmen bestehende Chassis ein hohes Leergewicht aufweist, da zur Erzielung eines flächig tragenden Bodens viele in Querrichtung verlaufende Kanthölzer zwischen den beiden Deckschichten des Caravanbodens notwendig sind. Darüber hinaus weist dieses Chassis insbesondere im Bereich der Anbindung des Achskörpers ein hohes Baumaß auf, wodurch die Höhe des Anhängerschwerpunktes bestimmt wird.

Neben diesem bekannten Aufbau eines Chassis für Fahrzeuganhänger ist aus der DD-Patentschrift 60 702 ein Fahrgestell für einachsige Wohnanhänger bekannt, bei dem auf einen den gesamten Fahrzeugaufbau umgebenden Tragrahmen verzichtet wird. Bei dieser bekannten Konstruktion ist im Bereich des Achskörpers ein schmaler Hilfsrahmen angeordnet, an dem eine Zugstange zur Verbindung mit einem Zugfahrzeug festgelegt ist. Sowohl die Zugstange als auch der Hilfsrahmen sind bei dieser bekannten Konstruktion in einer den Boden des Fahrzeugaufbau bildenden Sandwichplatte eingebettet. Zur Einbindung des Hilfsrahmens und der Zugstange ist es also notwendig, die Sandwichplatte so dick auszubilden, daß diese beiden Bauteile in ihr Aufnahme finden. Die Ausbildung einer solchen Sandwichplatte ist in der Fertigung sehr aufwendig. Als weiterer Nachteil dieses bekannten Konzepts ist anzumerken, daß die Einbindung der Stahlteile in den Sandwichboden die Ausbildung von Kältebrücken ermöglicht.

Ausgehend von diesem Stand der Technik liegt der Erfindung die **Aufgabe** zugrunde, ein Chassis für ein- oder mehrachsige Fahrzeuganhänger bereitzustellen, daß bei ausreichender Steifigkeit ein geringes Gewicht aufweist.

Die **Lösung** dieser Aufgabenstellung ist erfindungsgemäß gekennzeichnet durch eine aus einem mehrfach profilierten Material bestehende Plattform mit mehreren flächig an der Unterseite des Bodens eines Anhängeraufbaus anliegenden oberen Auflageflächen sowie mit gegenüber diesen oberen Auflageflächen tiefer gelegenen und mit diesen oberen Auflageflächen verbundenen Bereichen, wobei am vorderen Ende der profilierten Plattform eine Zugeinrichtung und an der Unterseite der profilierten Plattenform mindestens ein Achskörper festlegbar ist.

Bei dieser erfindungsgemäßen Ausgestaltung kann aufgrund der Verwendung der profilierten Plattform vollständig auf eine tragende Rahmenkonstruktion als Unterbau für den Fahrzeugaufbau verzichtet werden. Durch die Ausbildung der Profilierung in dem Material der Plattform erhält die den Unterbau bildenden Plattform die ausreichende Steifigkeit.

Gemäß einer praktischen Ausführungsform der Erfindung besteht die profilierte Plattform aus einem durch mehrfaches Kanten hergestellten Bauteil. Die Herstellung der profilierten Plattform als abgekantetes Profil stellt eine technisch einfache und wirtschaftlich lohnende Art dar, eine solche profilierte Plattform herzustellen. Neben dieser Art der Herstellung der profilierten Plattform ist es selbstverständlich auch möglich, diese profilierte Plattform durch Tiefziehen herzustellen.

Zur Erhöhung der Biegesteifigkeit der durch mehrfaches Kanten hergestellten profilierten Plattform wird vorgeschlagen, daß die durch das Kanten ausgebildeten Profilberge und Profiltäler zueinander ausgerichtet sind. Besonders vorteilhaft ist es dabei, wenn die durch das Kanten ausgebildeten Profilberge und Profiltäler parallel zueinander, insbesondere in Längsrichtung der Plattform, ausgerichtet sind. Durch diese Ausgestaltung der Profilform ergibt sich ein ausreichend biegesteifer Unterbau unter dem Fahrzeuganhänger.

Gemäß einer bevorzugten Ausführungsform der Erfindung ist die durch mehrfaches Kanten hergestellte profilierte Plattform im Querschnitt trapezförmig ausgebildet. Diese trapezförmige Struktur zeichnet sich nicht nur durch besonders gute statische Eigenschaften aus, sondern ist darüber hinaus auch noch auf einer Kantbank einfach herzustellen.

Die Biegesteifigkeit in Querrichtung zu der profilierten Plattform läßt sich durch im wesentlichen quer zur Ausrichtung der Profilierung verlaufende Verstärkungselemente erhöhen. Gemäß einer ersten Ausführungsform der Erfindung sind hierzu an der profilierten Plattform die Profilierung in Querrichtung durchgreifende Träger festlegbar. Diese Art der Anbringung von die Biegesteifigkeit der profilierten Platte in Querrichtung erhöhenden Streben hat den Vorteil, daß durch diese die Profilierung durchdringenden Streben die Bauhöhe der profilierten Plattform nicht vergrößert wird.

Gemäß einer zweiten praktischen Ausführungsform der Erfindung sind die Verstärkungselemente als an der Unterseite der profilierten Plattform festlegbare und quer zur Profilierung verlaufende Träger ausgebildet.

Im Bereich des mindestens einen an der Unterseite der profilierten Plattform festlegbaren Achskörpers kann die Querversteifung durch den Achskörper selbst dadurch erfolgen, daß der mindestens eine Achskörper zumindest partiell flächig an der Unterseite der profilierten Plattform anliegt und so gleichzeitig als Querstrebe für die profilierte Plattform dient.

Um ein möglichst variables Chassis bereitzustellen, wird gemäß einer weiteren Ausführungsform der Erfindung vorgeschlagen, daß der mindestens eine Achskörper über ein Achsträgerblech bzw. Verstärkungsblech an verschiedenen Positionen an der Unterseite der profilierten Plattform festlegbar ist. Weiterhin können die Einsatzmöglichkeiten für das erfindungsgemäße Chassis dadurch erweitert werden, daß die profilierte Plattform mehrteilig aufgebaut ist und die einzelnen die profilierte Plattform bildenden Teile über verschiedene in Längsrichtung und/oder Querrichtung der profilierten Plattform ausgebildete Positionen gegeneinander festlegbar sind. Auf diese Weise ist es möglich, mit einer zumindest zweiteilig ausgebildeten profilierten Plattform verschiedene Längen und/oder Breite des Chassis herzustellen. Durch diesen mehrteiligen Aufbau können verschiedene Baulängen und/oder Baubreiten des Chassis auf einfache Weise und kostengünstig bereitgestellt werden, ohne daß es notwendig ist, fertige Chassis für jede Baugröße auf Vorrat zu lagern.

Neben der Ausbildung des Chassis als profilierte Plattform aus einem dünnen Material kann eine weitere Verminderung des Gesamtgewichts dadurch erzielt werden, daß in der profilierten Plattform gewichtsreduzierende Ausnehmungen ausgebildet sind. Die Aufteilung der profilierten Plattform in mehrere Plattformteile erfolgt vorteilhafterweise im Bereich der Ausnehmungen, um die Überlappungsbereiche zu minimieren.

Die Deichsel, über die das Chassis mit einem Zugfahrzeug verbunden werden kann, ist gemäß einer Ausführungsform der Erfindung als an der profilierten Plattform festlegbare, aus profilierten Holmen gebildete Deichsel ausgebildet. Diese in an sich bekannter Weise hergestellte Deichsel aus Profilholmen läßt sich auf einfache Weise, beispielsweise im Bereich eines Querträgers an der profilierten Plattform festlegen.

Gemäß einer anderen Ausführungsform der Erfindung ist zur Ausbildung der Deichsel der vordere Bereich der profilierten Plattform als in Fahrtrichtung dreieckförmig zulaufend ausgebildet, wobei am vorderen spitzen Ende eine Auflaufvorrichtung festlegbar ist. Bei dieser erfindungsgemäßen Ausführungsform eines Chassis wird vollständig auf die bekannten Holmkonstruktionen sowohl für das Chassis selbst als auch für die Deichsel verzichtet. Durch die dreieckförmige Ausbildung der profilierten Plattform im Bereich der Deichsel ergibt sich eine besonders stabile Konstruktion, da die Flächenträgheitsmomente entgegen der Fahrtrichtung durch die breiter werdende profilierte Plattform steigen.

Um den vorderen als Deichsel ausgebildeten Bereich der profilierten Plattform bei dieser Ausgestaltungsform zu versteifen und darüber hinaus als Trittfläche nutzen zu können, um beispielsweise den Gasflaschenkasten eines Caravans besser beladen zu können, ist der die Deichsel bildende dreieckförmige Bereich der profilierten Plattform auf der Oberfläche zumindest teilweise durch eine ebene Oberfläche bildende Abdeckung abdeckbar. Zwischen der profilierten Plattform und der Abdeckung können dabei Stützelemente angeordnet sein, um die Steifigkeit der Abdeckung zu verstärken.

Aufgrund der Ausbildung des Chassis als profilierte Plattform mit mehreren flächig an der Unterseite des Bodens des Anhängeraufbaus anliegenden oberen Anlageflächen ist es bei dem erfindungsgemäßen Chassis möglich, den Boden des Anhängeraufbaus ausschließlich durch Verkleben mit der profilierten Plattform zu verbinden, da durch die oberen Anlageflächen der profilierten Plattform ausreichend flächige Anlageflächen zum Boden des Anhängeraufbaus zur Verfügung stehen.

Als Material für die profilierte Plattform kommen Stahlblech oder Leichtmetall, insbesondere Aluminium, in Frage. Die Witterungsbeständigkeit dieser profilierten Plattform kann dadurch erhöht werden, daß die Plattform mit einer Schutzschicht, insbesondere einer KTL-Beschichtung, d. h. kataphoretischen Tauch-Lackierung, versehen wird. Ebenso ist es möglich, daß bei der Verwendung von Stahlblech verzinktes Stahlblech verwendet wird.

Neben der Verwendung von Stahlblech und/oder Leichtmetall ist es selbstverständlich auch möglich, die profilierte Plattform aus Kunststoff, insbesondere faserverstärktem Kunststoff, herzustellen.

Das Festlegen einzelner Teile der profilierten Plattform miteinander und/oder der Querverstärkungen mit der Plattform und/oder der Achskörper mit der Plattform erfolgt vorteilhafterweise durch Schweißen, insbesondere Punktschweißen und/oder Nieten und/oder Verschrauben.

Weitere Merkmale und Vorteile der Erfindung ergeben sich aus der nachfolgenden Beschreibung der zugehörigen Zeichnung, in der zwei Ausführungsbeispiele eines erfindungsgemäßen Chassis für ein- oder zweiachsige Fahrzeuge dargestellt ist. In der Zeichnung zeigt:
- Fig. 1a: eine Draufsicht auf eine erste Ausführungsform eines erfindungsgemäßen Chassis für Fahrzeuganhänger;
- Fig. 1b: eine Seitenansicht des Chassis gemäß Fig. 1a;
- Fig. 2a: eine Draufsicht auf eine zweite Ausführungsform eines erfindungsgemäßen Chassis für Fahrzeuganhänger;
- Fig. 2b: eine Seitenansicht des Chassis gemäß Fig. 2a
- Fig. 3: einen ausschnittweisen Querschnitt durch eine profilierte Chassis-Plattform gemäß Fign. 1a und 2a;
- Fig. 4: eine ausschnittweise vergrößerte Darstellung der Detailansicht IV gemäß Fig. 1a;
- Fig. 5: einen ausschnittweise vergrößerten Querschnitt durch eine eingezogene Querstrebe entlang der Schnittlinie V-V gemäß Fig. 4
- Fig. 6: eine ausschnittweise vergrößerte Darstellung der Detailansicht VI gemäß Fign. 1a und 2a in der Ansicht von unten;
- Fig. 7: einen horizontal gespiegelten ausschnittweise vergrößerten Querschnitt entlang der Schnittlinie VII-VII gemäß Fig. 6;
- Fig. 8: einen horizontal gespiegelten ausschnittweise vergrößerten Schnitt entlang der Schnittlinie VIII-VIII gemäß Fig. 6;
- Fig. 9a: einen vergrößerten Querschnitt entlang der Schnittlinie IX a - IX a gemäß Fig. 2a durch den die Deichsel bildenden vorderen Teil der profilierten Plattform ohne Auflaufeinrichtung;
- Fig. 9b: einen vergrößerten Querschnitt entlang der Schnittlinie IX b - IX b gemäß Fig. 2a und;
- Fig. 9c: einen vergrößerten Querschnitt entlang der Schnittlinie IX c - IX c gemäß Fig. 2a.

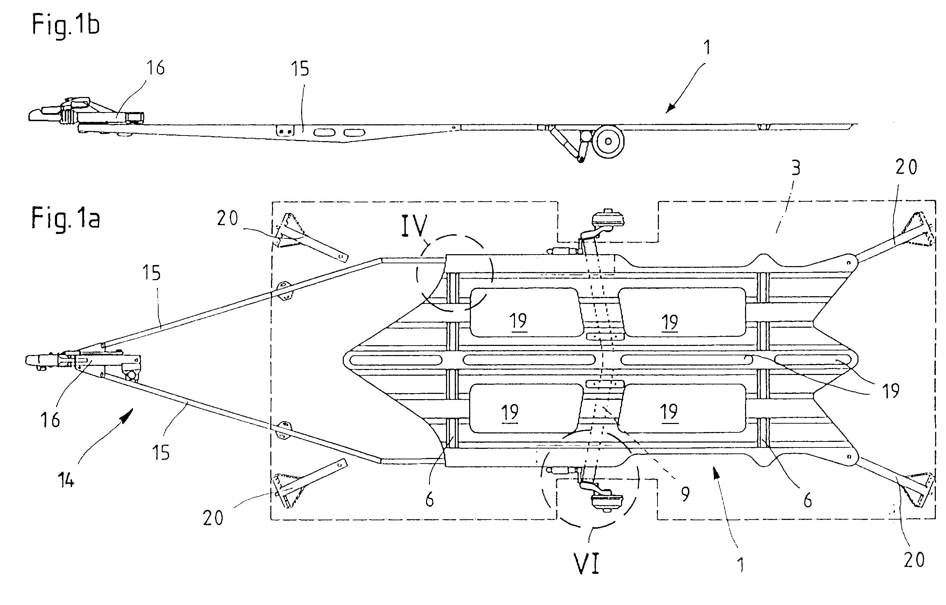

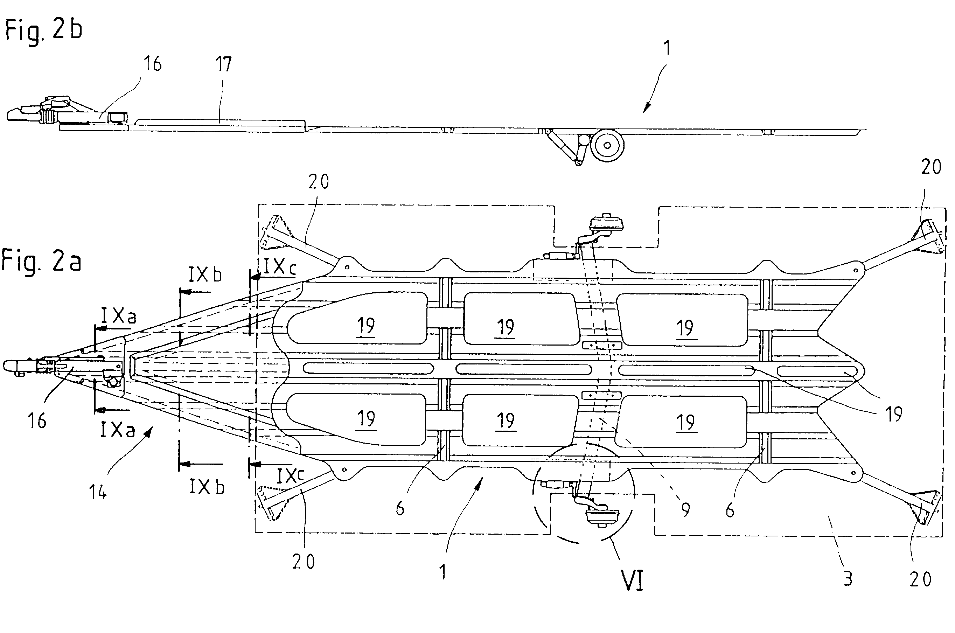

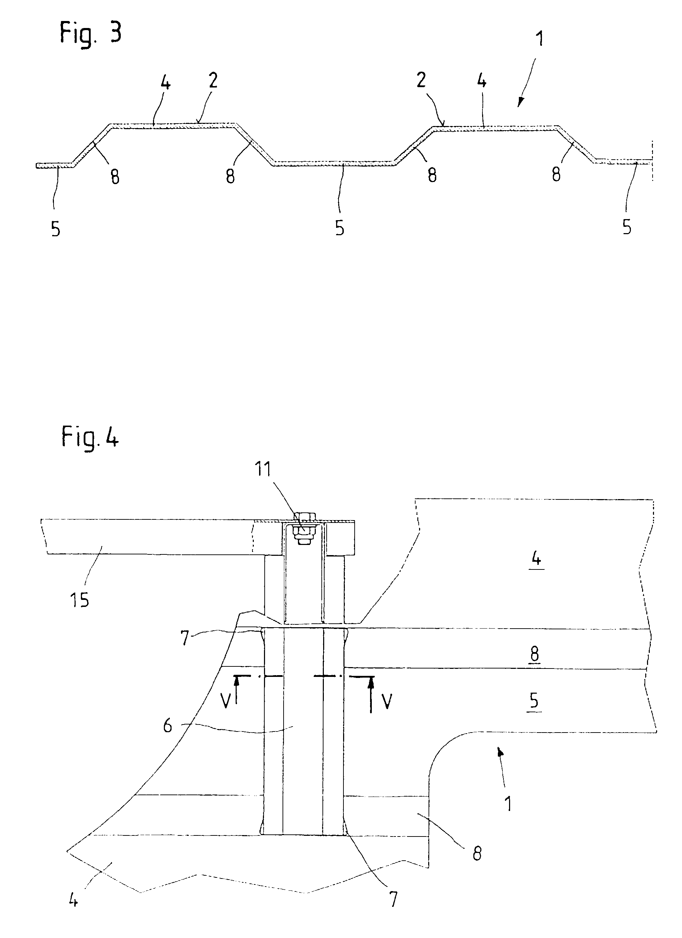

Die in Fig. 1a und 2a dargestellten Fahrgestelle oder Chassis für einachsige Fahrzeuganhänger bestehen im wesentlichen jeweils aus einer aus einem mehrfach profilierten Material bestehenden Plattform 1, deren in Fig. 3 beispielhaft dargestelltes Profil mehrere in einer gemeinsamen Ebene liegende obere Auflageflächen 2 aufweist, auf die ein Boden 3 eines Anhängeraufbaus aufsetzbar ist, wie dies gestrichelt in Fign. 1a und 2a dargestellt ist.

Wie die Abbildung der profilierten Plattformen 1 gemäß Fign. 1a und 2a erkennen läßt, zeichnet sich das dargestellte Chassis dadurch aus, daß auf einen aus dem Stand der Technik bekannten, aus Längs- und Querholmen bestehenden Tragrahmen zugunsten der dünnen profilierten Plattform 1 vollständig verzichtet wurde.

Bei dem dargestellten Ausführungsbeispiel weist die profilierte Plattform 1, wie aus Fig. 3 ersichtlich, ein im Querschnitt trapezförmiges Profil mit miteinander verbundenen Profilbergen 4 und Profiltälern 5 auf. Wie wiederum aus Fign. 1a und 2a ersichtlich ist, sind bei den dargestellten Ausführungsbeispielen die durch Kanten hergestellten Profilierungen so zueinander ausgerichtet, daß sie parallel zueinander in Längsrichtung der profilierten Plattform 1 verlaufen.

Neben dem Herstellen der profilierten Plattform 1 durch Abkanten ist es selbstverständlich auch möglich, die Profilform durch Tiefziehen herzustellen.

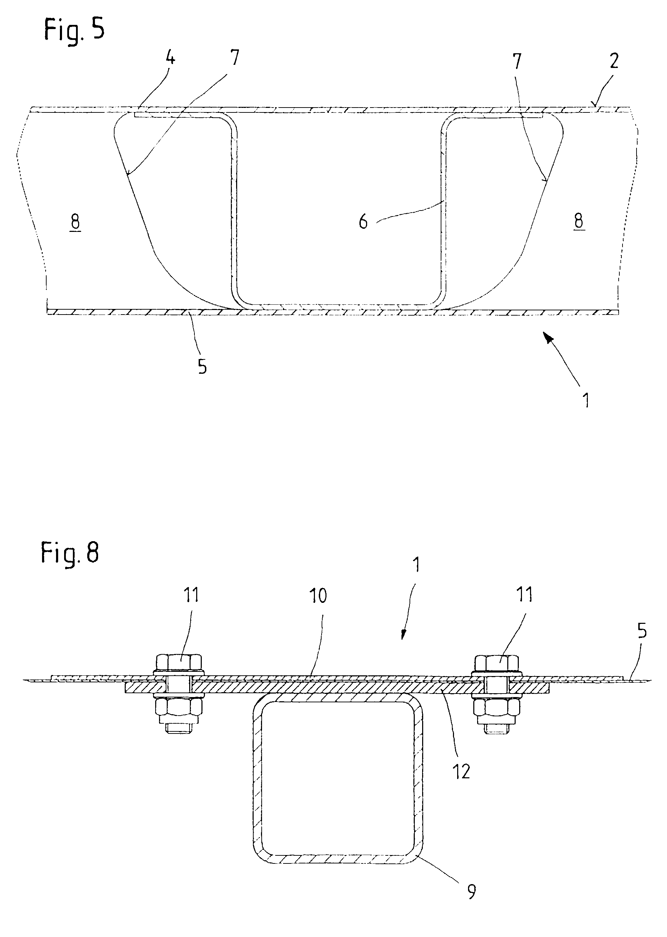

Um den profilierten Plattformen 1, die aufgrund der in Längsrichtung ausgebildeten Profilierung in Längsrichtung eine ausgezeichnete Biegesteifigkeit aufweisen, auch in Querrichtung eine erhöhte Biegesteifigkeit zukommen zu lassen, können wie in Fign. 1a und 2a dargestellt, quer zur Längsprofilierung verlaufende Querstreben 6 an der profilierten Plattform 1 festgelegt werden. Dies kann einerseits wie in Fign. 4 und 5 dargestellt dadurch erfolgen, daß die Querstreben 6 durch Ausnehmungen 7 in Profilflanken 8 der profilierten Plattform 1 gesteckt werden, die sich einerseits an der Unterseite der Profilberge 4 und andererseits auf der Oberseite der Profiltäler 5 abstützen, wie dies insbesondere der Fig. 5 zu entnehmen ist.

Eine weitere Verstärkung der profilierten Plattform in Querrichtung wird in den dargestellten Ausführungsformen dadurch erzielt, daß sich ein an der profilierten Plattform 1 festlegbarer Achskörper 9 mittelbar oder unmittelbar flächig an der Unterseite der Profiltäler 5 abstützt und so gleichzeitig einen verstärkenden Querträger bildet.

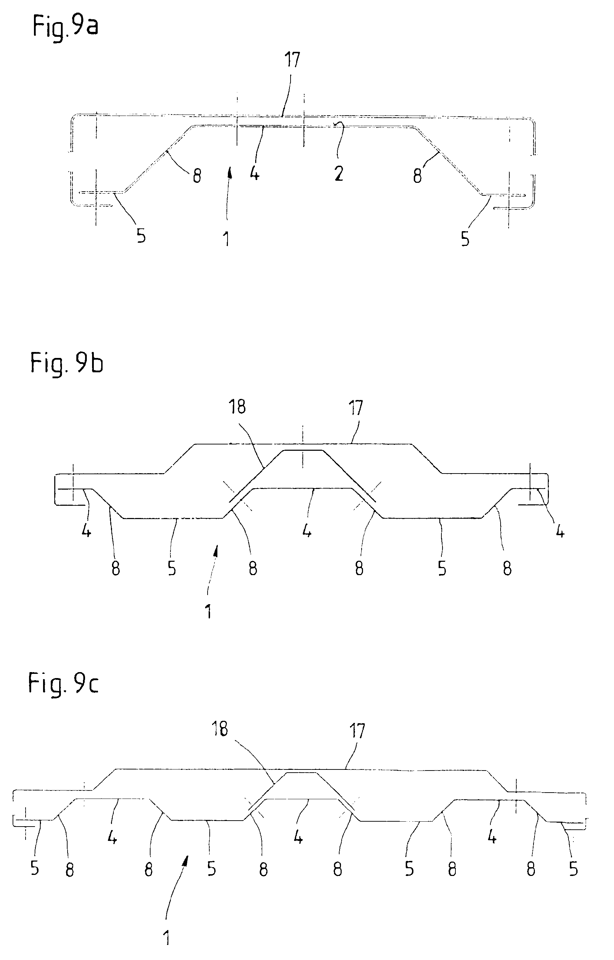

Neben der Möglichkeit, die Querstreben 6 durch Ausnehmungen 7 in den Profilflanken 8 anzuordnen ist es selbstverständlich auch möglich, Querstreben 6 an der Unterseite der profilierten Plattform 1 anzuordnen, so daß sie ähnlich dem in Fig. 8 dargestellten Achskörper 9 die profilierten Plattform 1 verstärken.

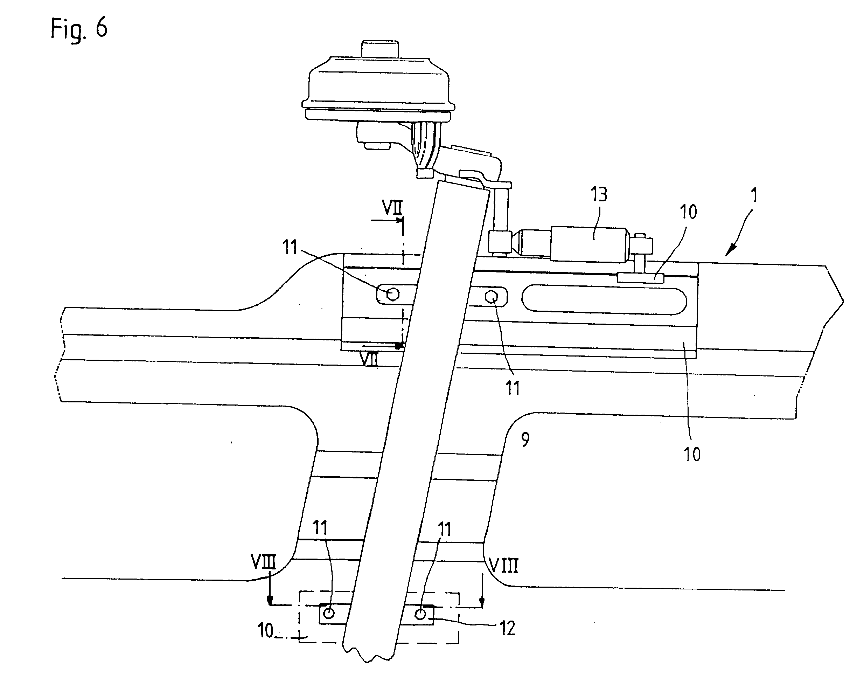

Die Anbindung des Achskörpers 9 an die profilierte Plattform 1 ist den Abbildungen 6, 7 und 8 zu entnehmen.

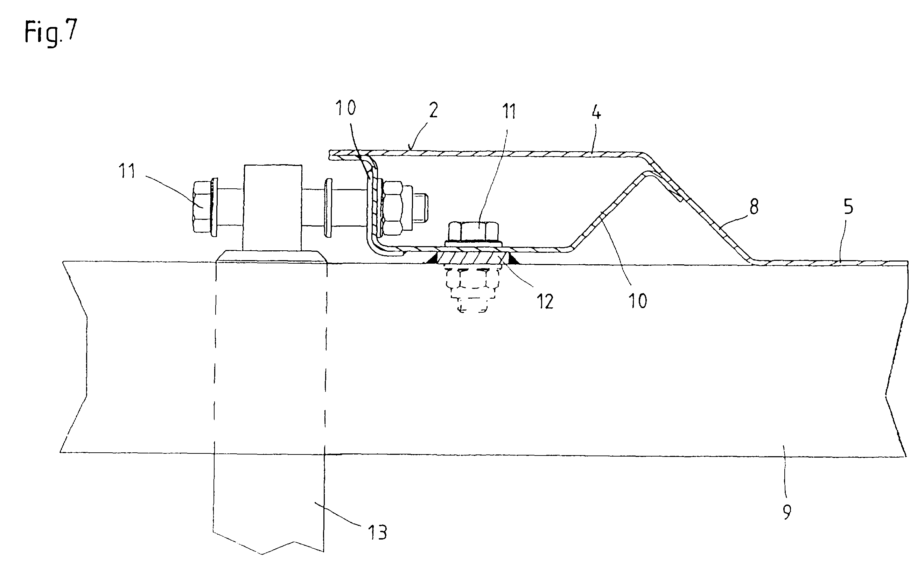

Bei dem dargestellten Ausführungsbeispiel ist die profilierte Plattform 1 im Bereich der Krafteinleitung des Achskörpers 9 in die profilierte Plattform 1 durch ein Verstärkungsblech 10 und ein Achsträgerblech 12 verstärkt. Wie aus Fign. 7 und 8 ersichtlich, ist der Achskörper 9 über Schraubverbindungen 11 mit der profilierten Plattform 1 verbunden. Um ein besonders variabel einsetzbares Chassis bereitzustellen, ist der Achskörper 9 in Längsrichtung der profilierten Plattform 1 an verschiedenen Stellen an der profilierten Plattform 1 festlegbar. Das Ausrichten und Verschieben des Achskörpers 9 wird dabei durch ein entsprechendes nichtdargestelltes Lochbild in der profilierten Plattform 1 und andererseits durch ein korrespondierendes in dem Verstärkungsblech 10 bzw. Achsträgerblech 12 ausgebildetes Lochbild ermöglicht.

Die Verwendung von Verstärkungsblechen 10 ist nicht nur im Bereich des Achskörpers 9 möglich, sondern kann an all den Punkten vorgesehen werden, an denen eine Krafteinleitung äußerer Kräfte in die profilierte Plattform 1 erfolgt. So ist beispielsweise bei der in Fig. 7 dargestellten Anbindung des Schwingungsdämpfers 13 an die profilierte Plattform 1 ebenfalls ein Verstärkungsblech 10 vorgesehen.

Die in Fign. 1a und 1b dargestellte profilierte Plattform 1 unterscheidet sich in der von Fign. 2a und 2b profilierten Plattform 1 dadurch, daß die im vorderen Bereich des Chassis angeordnete Deichsel 14 als aus profilierten Zugholmen 15 bestehende Deichsel 14 ausgebildet ist, die, wie in Fig. 4 dargestellt, über Schraubverbindungen 11 mit einer Querstrebe 6 an der profilierten Plattform 1 festgelegt sind.

Dahingegen ist bei der Ausführungsform gemäß Fign. 2a und 2b zur Ausbildung der Deichsel 14 der vordere Bereich der profilierten Plattform in Fahrtrichtung dreieckförmig zulaufend ausgebildet. Die bei der Ausführungsform gemäß Fig. 1a mit der Deichsel 14 verbundene Auflaufeinrichtung 16 am vorderen Ende der Zugholme 15 der Deichsel 14 ist bei der Ausführungsform gemäß Fig. 2a am vorderen spitzen Ende der dreieckförmig zulaufend ausgebildeten profilierten Plattform 1 festgelegt.

Bei Caravans ist es häufig wünschenswert, im vorderen Bereich der Deichsel 14 eine ebene Trittfläche auszubilden, um beispielsweise leichter den im vorderen Bereich der Caravans angeordneten Gasflaschenkasten bestücken zu können. Bei der in Fign. 2a und 2b dargestellten Ausführungform der Deichsel 14 ist die Ausbildung einer stabilen Trittfläche besonders einfach dadurch zu erzielen, daß der die Deichsel 14 bildende dreieckförmige Bereich der profilierten Plattform 1 auf der Oberseite durch eine eine ebene Oberfläche bildende und die profilierte Plattform 1 versteifende Abdeckung 17 abgedeckt wird, wie es den Abbildungen 9a, 9b und 9c zu entnehmen ist. Aus den Fign. 9b und 9c ist ersichtlich, daß die Trittfestigkeit der durch die Abdeckung 17 gebildeten Trittfläche dadurch verstärkt werden kann, daß zwischen der profilierten Plattform 1 und der Abdeckung 17 mindestens ein Stützelement 18 angeordnet wird, über welches sich die Abdeckung 17 der profilierten Plattform 1 abstützt. Um nach außen ein geschlossenes Erscheinungsbild der profilierten Plattform 1 im Bereich der Deichsel 14 bereitzustellen, umgreift die Abdeckung 17 die Außenseiten der Plattform 1.

Wie aus Fig. 2b ersichtlich, zeichnet sich die Ausführungsform, bei der auch der Bereich der Deichsel 14 durch die profilierte Plattform 1 gebildet wird, dadurch aus, daß das gesamte Chassis eine durchgehend konstante geringe Höhe aufweist. Durch das Ausbilden der vielen oberen Auflageflächen zum Aufsetzen des Bodens 3 des Anhängeraufbaus ist es möglich, die Verbindung zwischen profilierter Plattform 1 und Boden 3 des Anhängeraufbaus ausschließlich durch Kleben herzustellen.

Neben dem Ersatz des aus dem Stand der Technik bekannten Rahmenprofils zur Ausbildung des Chassis durch die aus einem dünnen Material gebildete profilierte Plattform 1 kann das Gewicht des Chassis noch weiterhin dadurch verringert werden, daß in der profilierten Plattform 1 gewichtsreduzierende Ausnehmungen 19 ausgebildet sind, wie dies den Abbildungen 1a und 2a zu entnehmen sind. Solche gewichtsreduzierenden Ausnehmungen 19 werden vorzugsweise an den Stellen ausgebildet, an denen im Anhängeraufbau beispielsweise feste Einbauten wie Schränke vorgesehen sind, so daß in diesen Bereichen keine großen Krafteinleitungen in die profilierte Plattform 1 zu erwarten sind. Ebenso kann durch die Ausbildung der Ausnehmungen 19 die Zugänglichkeit zur Ausbildung der Schweiß-, Niet- und/oder Schraubverbindungen in der Montage erleichtert werden.

Zum Abstützen des Chassis gegenüber dem Boden sind im vorderen und hinteren Bereich des Chassis jeweils zwei herabkurbelbare Stützen 20 angeordnet, die am Boden 3 des Anhängeraufbaus und/oder an der Unterseite der profilierten Plattform 1 befestigt sind.

Neben der in der Abbildung dargestellten einstückigen Ausführungsform der profilierten Plattform 1 ist es auch möglich, die profilierte Plattform 1, insbesondere in Querrichtung geteilt, mehrteilig auszubilden. Diese mehrteilige Ausbildung der profilierten Plattform 1 hat einerseits bei großen Abmessungen fertigungstechnische Vorteile und ermöglicht andererseits eine variable Längengestaltung der das Chassis bildenden profilierten Plattform 1. Zu diesem Zweck sind in den einzelnen Teilen der profilierten Plattform 1 entsprechende Lochbilder ausgebildet, die eine Verschiebung der einzelnen Teile der profilierten Plattform 1 in Längsrichtung der profilierten Plattform 1 zueinander erlauben. Auf diese Weise ist es ohne das Bereithalten vorgefertigter profilierter Plattformen 1 mit verschiedenen Abmessungen möglich, verschieden lange Chassis-Plattformen herzustellen.

Als Materialien zur Ausbildung der profilierten Plattform 1 bieten sich Stahlblech, insbesondere verzinktes Stahlblech, und Leichtmetalle, insbesondere Aluminium an. Selbstverständlich ist es auch möglich, die profilierte Plattform 1 aus Kunststoff, insbesondere faserverstärktem Kunststoff, herzustellen. Bei der Verwendung von metallenen Materialien ist es weiterhin sinnvoll, aus Korrosionsschutzgründen die profilierte Plattform 1 mit einer Schutzschicht zu versehen. Hierbei empfiehlt sich als Beschichtung insbesondere eine KTL-Beschichtung, bei der es sich um eine kataphoretische Tauch-Lackierung handelt.

Ein solchermaßen ausgebildetes Chassis für Fahrzeuganhänger zeichnet sich somit dadurch aus, daß vollständig auf den aus dem Stand der Technik bekannten Rahmen aus profilierten Holmen verzichtet werden kann. Statt der Profilholme wird das Chassis durch ein mehrfach profiliertes Bauteil gebildet, das eine Gewichtsreduzierung insbesondere im Bodenbereich durch die flächige Krafteinleitung ermöglicht. Neben der Gewichtsreduzierung zeichnet sich diese Ausgestaltungsform dadurch aus, daß die Bauhöhe gegenüber den insbesondere im Bereich der Anbindung des Achskörpers 9 sehr hohen Profilholme reduziert werden kann, so daß diese Höhenreduzierung des Chassis dem Fahrzeugaufbau zugute kommen kann.

### Bezugszeichenliste

- 1: profilierte Plattform
- 2: obere Auflagefläche
- 3: Boden des Anhängeraufbaus
- 4: Profilberg
- 5: Profiltal
- 6: Querstrebe
- 7: Ausnehmung
- 8: Profilflanke
- 9: Achskörper
- 10: Verstärkungsblech
- 11: Schraubverbindung
- 12: Achsträgerblech
- 13: Schwingungsdämpfer
- 14: Deichsel
- 15: Zugholm
- 16: Auflaufeinrichtung
- 17: Abdeckung
- 18: Stützelement
- 19: Ausnehmung
- 20: Stütze

## Patentansprüche

1. Chassis für ein- oder mehrachsige Fahrzeuganhänger, insbesondere Caravans,
**gekennzeichnet durch**
eine aus einem mehrfach profilierten Material bestehende Plattform (1) mit mehreren flächig an der Unterseite des Bodens eines Anhängeraufbaus anliegenden oberen Auflageflächen (2) sowie mit gegenüber diesen oberen Auflageflächen (2) tiefer gelegenen und mit diesen oberen Auflageflächen (2) verbundenen Bereichen, wobei am vorderen Ende der profilierten Plattform (1) eine Zugeinrichtung (14) und an der Unterseite der profilierten Plattform (1) mindestens ein Achskörper (9) festlegbar ist.

2. Chassis nach Anspruch 1, dadurch gekennzeichnet, daß die profilierte Plattform (1) aus einem durch mehrfaches Kanten hergestellten Bauteil besteht.

3. Chassis nach Anspruch 2, dadurch gekennzeichnet, daß die durch das Kanten ausgebildeten Profilberge (4) und Profiltäler (5) zueinander ausgerichtet sind.

4. Chassis nach Anspruch 2 oder 3, dadurch gekennzeichnet, daß die durch das Kanten ausgebildeten Profilberge (4) und Profiltäler (5) parallel zueinander, insbesondere in Längsrichtung der Plattform (1) ausgebildet sind.

5. Chassis nach mindestens einem der Ansprüche 2 bis 4, dadurch gekennzeichnet, daß die durch mehrfaches Kanten hergestellte profilierte Plattform (1) im Querschnitt trapezförmig ausgebildet ist.

6. Chassis nach mindestens einem der Ansprüche 1 bis 5, dadurch gekennzeichnet, daß die profilierte Plattform (1) durch im wesentlichen quer zur Ausrichtung der Profilierung verlaufende Elemente (6) verstärkbar ist.

7. Chassis nach Anspruch 6, dadurch gekennzeichnet, daß an der profilierten Plattform (1) die Profilierung in Querrichtung durchdringende Streben (6) festlegbar sind.

8. Chassis nach Anspruch 6, dadurch gekennzeichnet, daß an der Unterseite der profilierten Plattform (1) quer zur Profilierung verlaufende Streben (6) festlegbar sind.

9. Chassis nach mindestens einem der Ansprüche 1 bis 8, dadurch gekennzeichnet, daß der mindestens eine Achskörper (9) zumindest partiell an der Unterseite der profilieren Plattform (1) anliegt.

10. Chassis nach Anspruch 9, dadurch gekennzeichnet, daß der mindestens eine Achskörper (9) über ein Achsträgerblech (12) bzw. Verstärkungsblech (10) mit der profilierten Plattform (1) verbunden ist.

11. Chassis nach mindestens einem der Ansprüche 1 bis 10, dadurch gekennzeichnet, daß der mindestens eine Achskörper (9), insbesondere über ein entsprechendes Lochbild in der profilierten Plattform (1) an verschiedenen Positionen an der Unterseite der profilierten Plattform (1) festlegbar ist.

12. Chassis nach mindestens einem der Ansprüche 1 bis 11, dadurch gekennzeichnet, daß in der profilierten Plattform (1) gewichtsreduzierende Ausnehmungen (19) ausgebildet sind.

13. Chassis nach mindestens einem der Ansprüche 1 bis 12, dadurch gekennzeichnet, daß die profilierte Plattform (1) mehrteilig aufgebaut ist.

14. Chassis nach Anspruch 13, dadurch gekennzeichnet, daß die einzelnen, die profilierte Plattform (1) bildenden Teile über verschiedene in Längsrichtung und/oder Querrichtung der profilierten Plattform (1) ausgebildete Positionen gegeneinander festlegbar sind.

15. Chassis nach Anspruch 13 oder 14, dadurch gekennzeichnet, daß die Aufteilung der profilierten Plattform (1) in mehrere Teile insbesondere im Bereich der Ausnehmungen (19) erfolgt.

16. Chassis nach mindestens einem der Ansprüche 1 bis 15, dadurch gekennzeichnet, daß die Deichsel (14) als an der profilierten Plattform (1) festlegbare profilierte Zugholme (15) ausgebildet ist.

17. Chassis nach mindestens einem der Ansprüche 1 bis 15, dadurch gekennzeichnet, daß zur Ausbildung der Deichsel (14) der vordere Bereich der profilierten Plattform (1) in Fahrtrichtung dreieckförmig zulaufend ausgebildet ist, wobei am vorderen spitzen Ende eine Auflaufeinrichtung (16) festlegbar ist.

18. Chassis nach Anspruch 17, dadurch gekennzeichnet, daß der die Zugeinrichtung (14) bildende dreieckförmige Bereich der profilierten Plattform (1) auf der Oberseite zumindest teilweise durch eine eine ebene Oberfläche bildende Abdeckung (17) verstärkbar ist.

19. Chassis nach Anspruch 18, dadurch gekennzeichnet, daß zwischen der profilierten Plattform (1) und der Abdeckung (17) Stützelemente (18) angeordnet sind.

20. Chassis nach mindestens einem der Ansprüche 1 bis 19, dadurch gekennzeichnet, daß ein Boden (3) des auf die oberen Auflageflächen (2) der profilierten Plattform (1) aufsetzbaren Aufbaus mit den Auflageflächen (2) verklebbar ist.

21. Chassis nach mindestens einem der Ansprüche 1 bis 20, dadurch gekennzeichnet, daß die profilierte Plattform (1) aus Stahlblech oder Leichtmetall, insbesondere Aluminium, besteht.

22. Chassis nach Anspruch 21, dadurch gekennzeichnet, daß die profilierte Plattform (1) mit einer Schutzschicht, insbesondere einer KTL-Beschichtung, versehen ist.

23. Chassis nach mindestens einem der Ansprüche 1 bis 20, dadurch gekennzeichnet, daß die profilierte Plattform (1) aus Kunststoff, insbesondere faserverstärktem Kunststoff, besteht.

24. Chassis nach mindestens einem der Ansprüche 1 bis 23, dadurch gekennzeichnet, daß das Festlegen der einzelnen Teile der profilierten Plattform (1) miteinander und/oder der Querstreben (6) mit der Plattform (1) und/oder des Achsträgerblechs (12) bzw. Verstärkungsblechs (10) mit der Plattform (1) durch Schweißen, insbesondere Punktschweißen, Nieten und/oder Schrauben erfolgt.
